# EUROPEAN PATENT SPECIFICATION

(11) **EP 0 449 815 B1**
(45) Date of publication and mention of the grant of the patent: **14.12.1994**
(21) Application number: 89904587.6
(22) Date of filing: 05.04.1989
(51) Int. Cl.: B62K 25/00, B60G 21/04

(54) **CYCLES**
FAHRRÄDER
CYCLES

(30) Priority: 08.04.1988 GB 8808178; 17.11.1988 GB 8826905
(43) Date of publication of application: 09.10.1991
(73) Proprietor: SMART, David, Graham, Middlesex TW16 5EQ (GB)
(72) Inventor: SMART, David, Graham, Middlesex TW16 5EQ (GB)
(74) Representative: Gibson, Stewart Harry
(86) International application number: GB8900352
(87) International publication number: WO8909718

(56) References cited:
- DE-A- 3 150 357
- GB-A- 412 204
- US-A- 2 950 122
- US-A- 4 583 612

## Description

This invention relates to cycles, particularly pedal bicycles but the teachings of the invention are also applicable to mopeds and tricycles.

Cycles are prone to punctures and their performance is limited by reliance upon pneumatic tyres as the only cushion against shock and vibration. It has been proposed to incorporate resilient suspension but it is a drawback of suspension systems hitherto proposed that the rider's effort on the pedals is partly absorbed by the suspension, so that the cycles concerned are not suitable for racing.

In accordance with this invention, there is provided a pedal cycle, comprising a main frame, a front suspension displaceably mounted to said main frame, a front wheel rotatably mounted to said front suspension, a rear suspension displaceably mounted to said main frame, a rear wheel rotatably mounted to said rear suspension, a pair of pedals rotatably mounted via a crankaxle to said main frame, and a chain transmission for transmitting drive from said pair of pedals to said rear wheel, **characterised in that** the rear suspension is pivoted to said main frame at a point above a line extending through said crank axle and the rear wheel axle, and an interconnecting link interconnects said front suspension and said rear suspension so that any load on said front wheel, tending to lift said front wheel by displacement of said front suspension relative to said main frame, applies a force to said interconnecting link which is transmitted by said interconnecting link to said rear suspension for displacing said rear suspension relative to said main frame, with said interconnecting links further acting so that a force applied thereto by said rear suspension, due to tension developed in said chain transmission by the rider pushing down on a forward pedal of said pair of pedals, is substantially fully transmitted to said front suspension in opposition to a force applied to said interconnecting link due to a load placed on said front suspension by the rider pushing down on said forward pedal.

Preferably the pedal cycle further comprises resilient biassing means for opposing displacement of the interconnecting link in a direction away from the rear suspension and towards the front suspension.

In one embodiment, the interconnecting link comprises a rod which extends through a tubular element of the main frame, which houses at least one compression spring for opposing movement of the rod in the forwardly direction. In a modification, a lost-motion device may be included in the interconnecting link (e.g. in the rod just described) between front and rear suspensions. In another embodiment to be described herein, each suspension includes a resilient element independently opposing displacement of that suspension relative to the main frame, and the interconnecting link comprises a cable which interconnects the two suspensions for transmitting a force under tension from one suspension to the other. The resilient elements may comprise bodies of rubber or other resilient material which are mounted to the main frame, with a peg projecting from a moving element of the respective suspension and into the respective resilient body.

Preferably the pedal cycle has a main frame structure connecting four parallel bores being points of attachment for the crank axle, the rear suspension pivot, a front suspension pivot and the steering tube pivot. The main frame may additionally include a fifth bore being a point of attachment for a lever arm of the interconnection system of the front and rear suspensions. The main frame may include another bore being a point of attachment for a brace to the seat tube. The main frame may include further bores receiving the resilient bodies referred to above, which resiliently oppose displacement of the respective suspensions.

It will be appreciated that because the main frame includes a plurality of bores, all parallel to each other, for mounting or attachment to the frame of the necessary components and assemblies of the cycle, the frame lends itself to being moulded, the two halves of the mould being separated along an axis perpendicular to the plane of the frame.

Embodiments of this invention will now be described by way of examples only and with reference to the accompanying drawings, in which:
FIGURE 1 is a diagrammatic side view of a pedal bicycle in accordance with one embodiment of the invention;
FIGURE 2 is a longitudinal section through a lost-motion device which may be incorporated in the inter connection system between the front and rear suspensions; and
FIGURE 3 is a diagrammatic side view of a pedal bicycle in accordance with another embodiment of the invention.

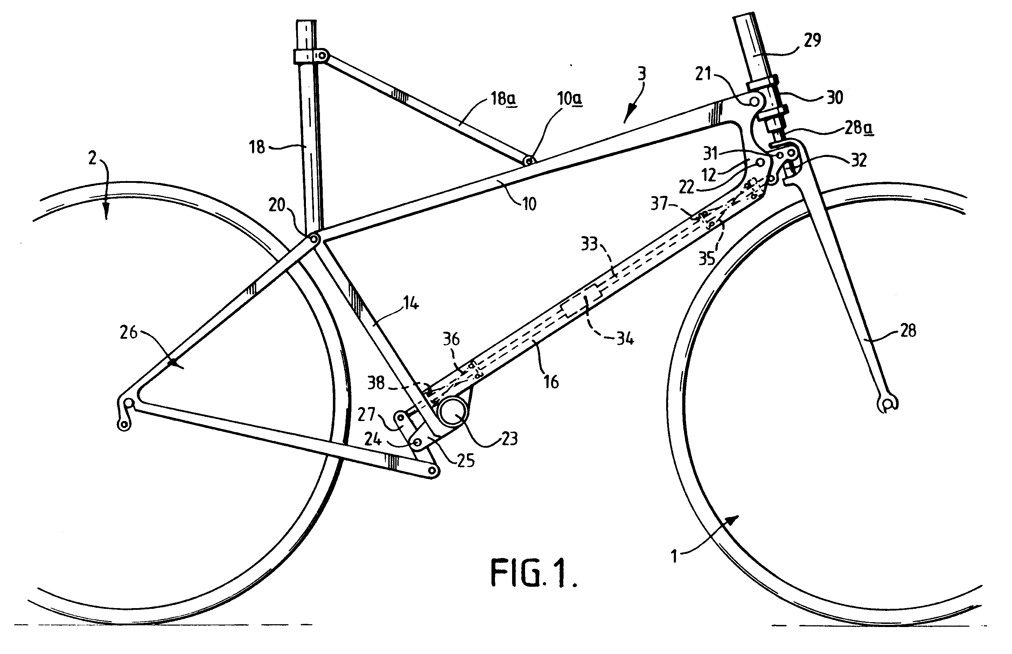

Referring to Figure 1 of the drawings, there is shown a pedal bicycle comprising front and rear wheels 1, 2 and a main frame 3. For the sake of simplicity the pedals and transmission to the rear wheel are not shown and moreover the seat and handlebars are omitted. The main frame 3 comprises an upper, straight element 10, a short, generally vertical element 12 extending downwards from the front end of the element 10, a longer straight element 14 extending downwardly and forwardly from the rear end of the element 10, and a lower straight element 16 which extends forwardly and upwardly from the lower end of element 14 to the lower end of element 12. The main frame further comprises an upright seat tube 18 extending from the rear end of the element 10. The main frame may be constructed of tubular metal or it may be die-cast. The main frame is formed with six through-bores all parallel to each other and perpendicular to the plane containing the main frame, these six bores being at 20 (at the junction of elements 10 and 14), at 21 (junction of elements 10 and 12), at 22 (adjacent the lower end of element 12), at 23 (adjacent the junction of elements 14 and 16), at 24 (on a projection 25 extending downwardly and rearwardly from the junction of elements 14 and 16,) and at 10a (to form a point of attachment for seat tube brace 18a). The bore 23 serves to mount the crank axle, whilst the functions of bores 20-22 and 24 will be described below.

The rear wheel 2 is rotatably mounted to a rear suspension 26 which comprises a bifurcated V-shape sub-frame, the free end of the upper elements being pivoted to the main frame by a bearing extending through the bore 20, at which point the seat tube 18 is also pivotally mounted. The free ends of the lower elements of the sub-frame are pivoted to one end of a lever arm 27, which is pivoted intermediate its ends to the extension 25 of the main frame, using the bore 24. It will be noted that the rear suspension pivot 20 is above the transmission line i.e. the line from the crank axle 23 to the rear wheel axle.

The front wheel 1 is rotatably mounted to the front forks 28 of the bicycle. The front forks 28 are fixed to the lower end of a steering column 28a which has a longitudinally splined upper end fitted into a similarly splined lower end of a steering tube 29, to which the handlebars are fitted. The steering column 28a is therefore slidable relative to the steering tube 29 but turns therewith. The steering tube 29 passes through a tubular collar 30 and is mounted thereto on bearings giving axial and radial support yet permitting turning of the steering tube 29.

A front suspension of the bicycle comprises a crank element 31 pivotally mounted to the main frame 3 using the bore 22. A leg of the crank which projects forwardly from the pivotal mounting at 22 is pivoted to a tubular collar 32 on the lower end of the steering column 28a.

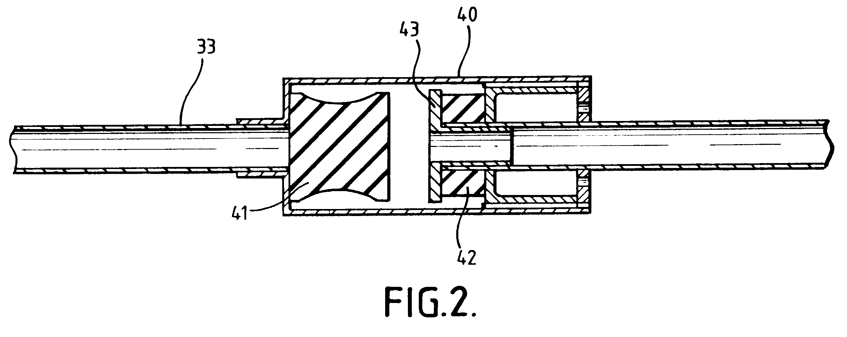

The front and rear suspensions of the bicycle are interconnectd by a rod 33 extending through the lower element 16 of the main frame: this rod 33 may be continuous or it may include a lost-motion device 34 which will be described with reference to Figure 2. The rear end of rod 33 emerges from the main frame and is pivoted to the upper end of the lever arm 27. The forward end of the rod 33 emerges from the main frame and is pivoted to the free end of a leg of the crank 31 which projects downwardly from its pivot 22. Compression springs 35, 36 are mounted in the main frame element 16 adjacent its top and bottom ends respectively, encircling the rod 33. Washers 37 and 38 are fixed to the rod 33 and serve to compress spring 35 or 36 upon movement of the rod 33 forwardly.

It will thus be seen that the pedal cycle of Figure 1 is of variable geometry by reason of the front and rear suspensions being movable relative to the main frame. Also, the suspension components may be replaced by others of different size and shape to allow bicycles of selected geometry to be built using the one design of main frame. The front and rear suspensions are interconnected by the rod 33, so that movement of one suspension is transmitted to the other. Thus if there is a load on the front wheel, due to riding over a bump, this will tend to move the front wheel upwards relative to the main frame (the steering column sliding in the steering tube 29 and also the collar 30 pivoting): this movement pivots the crank 31 so as to pull forwardly on the rod 33, with the effect of moving the rear wheel upwards (pivoting its sub-frame about 20). If there is a load on the rear wheel, this tends to move the rear wheel upwards and push the rod 33 forwardly, in turn pivoting crank 31 so as to lift the front wheel. These movements are opposed resiliently by the compression springs 35, 36.

As the rider pushes down on the forward pedal the reaction to the force exerted causes an extra load on the front suspension. The resulting forward pull on the rod 33 is substantially the same as the rearward pull on the rod which occurs because the chain tension is tending to rotate the rear suspension downwards around the pivot 20. Thus the chain tension balances the reaction in the suspension resulting from the force exerted on the pedals.

The interaction between transmission and suspension provides for better responsiveness than in a conventional unsprung bicycle and the improvement is even more significant when riding on bumpy roads. Thus with the reactive suspension, every bump struck by either wheel causes an instantaneous increase in chain tension, if the rider continues pedalling. This gives the bicycle a lively response on poor road surfaces, in addition to its smooth, quiet and comfortable ride.

As mentioned previously, the rod 33 which interconnects the front and rear suspension may include a lost-motion device 34 as shown in Figure 2. This device comprises a tubular housing 40 with the rear portion of rod 33 attached to one of its ends, with a rubber block 41 disposed within the housing 40 at this end. The front portion of the rod 33 is slidable in the front end of the housing 40 and carries a rubber block 42. It will be appreciated that in response to a load from the rear suspension displacing the rear portion of rod 33 forwardly a certain amount of this movement must take place before rubber block 41 abuts the flange 43 to commence forward movement of the front portion of rod 33. Also normally a small gap exists between rubber block 42 and its seat against flange 43, so that in response to a load from the front suspension pulling the front portion of rod 16 forwardly, a certain amount of this movement must take place before flange 43 seats on rubber block 42 to commence pulling on the rear portion of rod 33.

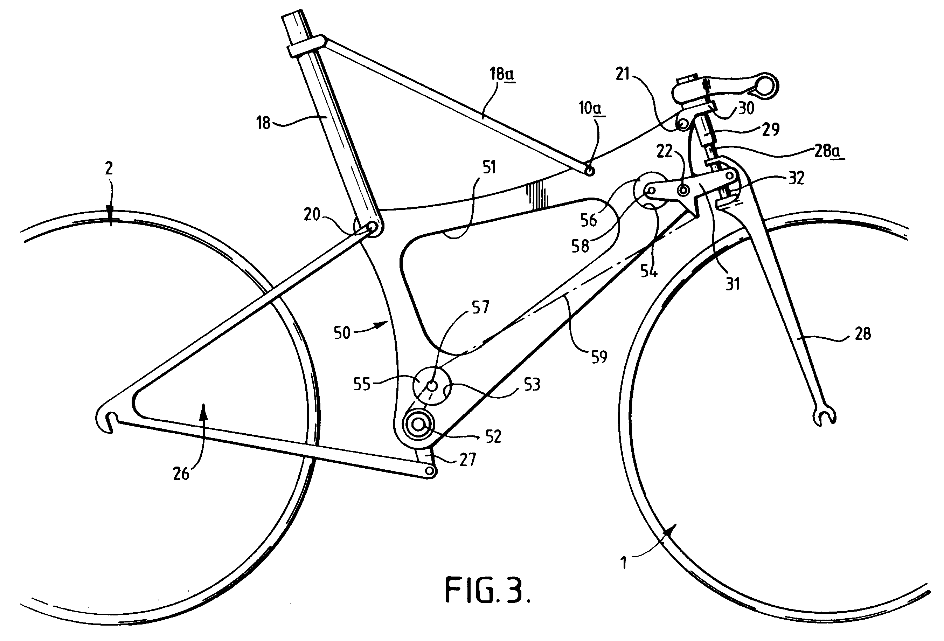

Figure 3 shows another embodiment of pedal bicycle in accordance with this invention, and exhibits a number of modifications relative to the bicycle shown in Figure 1. Like parts in Figures 1 and 3 are denoted by like reference numerals. In the bicycle of Figure 3, the frame 50 comprises a unitary, generally flat structure, optionally formed with a central aperture 51 to save weight. The frame 50 may be die-cast from metal or moulded from appropriate synthetic plastics e.g. reinforced with carbon fibre. The frame 50 is formed with the transverse bores 20, 10a, 21 and 22 for the same purposes as in the bicycle of Figure 1: a further transverse bore 52 serves as a mounting for the crank axle and also for the pivotal lever 27. Two further transverse bores 53 and 54 are formed through the frame and mount circular rubber bodies 55, 56. Pegs 57, 58 projecting from lever 27 and crank 31, respectively, project into the centres of the rubber bodies 55, 56. These bodies provide resilient forces tending to return the lever 27 and crank 31, respectively to rest positions. A cable 59 extends between the lever 27 and the crank 31 to transmit a force under tension from one suspension to the other, in similar manner as described above in relation to the bicycle of Figure 1.

It will be appreciated that because the several transverse bores through the bicycle frame (both of Figure 1 and Figure 2) are parallel to each other and perpendicular to the plane of the frame, the frame can conveniently be manufactured by moulding, the two halves of the mould being separated along an axis perpendicular to the plane of the frame.

## Claims

1. A pedal cycle, comprising a main frame (3), a front suspension (28,31,32) displaceably mounted to said main frame (3), a front wheel (1) rotatably mounted to said front suspension (28,31,32), a rear suspension (26) displaceably mounted to said main frame (3), a rear wheel (2) rotatably mounted to said rear suspension (26), a pair of pedals rotatably mounted via a crankaxle to said main frame, and a chain transmission for transmitting drive from said pair of pedals to said rear wheel (2), **characterised in that** the rear suspension (26) is pivoted to said main frame at a point (20) above a line extending through said crank axle and the rear wheel axle, and an interconnecting link (33) interconnects said front suspension (28,31,32) and said rear suspension (26) so that any load on said front wheel (1), tending to lift said front wheel (1) by displacement of said front suspension (28,31,32) relative to said main frame (3), applies a force to said interconnecting link which is transmitted by said interconnecting link (33) to said rear suspension (26) for displacing said rear suspension (26) relative to said main frame (3), with said interconnecting links (33) further acting so that a force applied thereto by said rear suspension (26), due to tension developed in said chain transmission by the rider pushing down on a forward pedal of said pair of pedals, is substantially fully transmitted to said front suspension (28,31,32) in opposition to a force applied to said interconnecting link (33) due to a load placed on said front suspension by the rider pushing down on said forward pedal.

2. A pedal cycle as claimed in claim 1, characterised by resilient biassing means (35,36) for opposing displacement of said interconnecting link (33) in a direction away from said rear suspension (26) and towards said front suspension.

3. A pedal cycle as claimed in claim 2, characterised in that said interconnecting link (33) comprises a rod longitudinally movable relative to said main frame with said biassing means (35,36) acting between said rod (33) and said main frame (3) for opposing longitudinal movement of said rod (33) in said direction.

4. A pedal cycle as claimed in claim 3, characterised in that a lost-motion device (34) is included in said rod (33).

5. A pedal cycle as claimed in claim 2, characterised in that each suspension includes a resilient element (55,56) independently opposing displacement of that suspension relative to the main frame (3), and said interconnecting link comprises a cable (59) which interconnects the two suspensions for transmitting a force under tension from one suspension to the other.

6. A pedal cycle as claimed in any preceding claim, characterised in that said main frame (3) includes at least four parallel, transverse bores (23,20,22,21) serving as mounting points for the crank axle, said rear suspension pivot, a front suspension pivot and a steering tube pivot.

## Patentansprüche

1. Ein Pedalfahrrad mit einem Hauptrahmen (3), einer verschiebbar an dem Hauptrahmen (3) angebrachten vorderen Aufhängung (28,31,32), einem drehbar an der vorderen Aufhängung (28,31,32) angebrachten Vorderrad (1), einer verschiebbar an dem Hauptrahmen (3) angebrachten hinteren Aufhängung (26), einem drehbar an der hinteren Aufhängung (26) angebrachten Hinterrad (2), einem über eine Kurbelachse an dem Hauptrahmen drehbar gelagerten Paar von Pedalen und einer Kettentransmission zur Übertragung von Antriebskraft von dem Pedalpaar zu dem Hinterrad (2), dadurch gekennzeichnet, daß die hintere Aufhängung (26) an einem oberhalb einer durch die Kurbelachse und die hintere Radachse verlaufende Linie liegenden Punkt (20) mit dem Hauptrahmen schwenkbar verbunden ist und ein Verbindungsglied (33) die vordere Aufhängung (28,31,32) und die hintere Aufhängung (26) derart miteinander verbindet, daß irgendeine Belastung des Vorderrads (1), die dazu neigt, das Vorderrad (1) durch Verschiebung der vorderen Aufhängung (28,31,32) im Verhältnis zu dem Hauptrahmen (3) anzuheben, auf das Verbindungsglied eine Kraft ausübt, die durch das Verbindungsglied (33) der hinteren Aufhängung (26) mitgeteilt wird, um die hintere Aufhängung (26) im Verhältnis zum Hauptrahmen (3) zu verschieben, wobei das Verbindungsglied (33) ferner derart wirkt, daß eine Kraft, die von der hinteren Aufhängung (26) infolge der in der Kettentransmission entwickelten Spannung darauf ausgeübt wird, wenn der Fahrer ein vorderes Pedal des Pedalpaars niedertritt, im wesentlichen vollständig auf die vordere Aufhängung (28,31,32) entgegen einer Kraft übertragen wird, die auf das Verbindungsglied (33) infolge einer Last ausgeübt wird, die auf die vordere Aufhängung dadurch aufgebracht wird, daß der Fahrer das vordere Pedal niedertritt.

2. Ein Pedalfahrrad nach Anspruch 1, gekennzeichnet durch elastische Mittel (35,36) zur Erzeugung einer Gegenkraft, die einer Verschiebung des Verbindungsglieds (33) in einer Richtung weg von der hinteren Aufhängung (26) und zu der vorderen Aufhängung hin entgegenwirkt.

3. Ein Pedalfahrrad nach Anspruch 2, dadurch gekennzeichnet, daß das Verbindungsglied (33) eine in Längsrichtung im Verhältnis zu dem Hauptrahmen bewegliche Stange umfaßt, wobei die Mittel (35,36) zur Erzeugung einer Gegenkraft zwischen der Stange (33) und dem Hauptrahmen (3) wirken, um einer Längsverschiebung der Stange (33) in der angegebenen Richtung entgegenzuwirken.

4. Ein Pedalfahrrad nach Anspruch 3, dadurch gekennzeichnet, daß in die Stange (33) eine Leerhubeinrichtung (34) eingeschlossen ist.

5. Ein Pedalfahrrad nach Anspruch 2, dadurch gekennzeichnet, daß jede Aufhängung ein elastisches Element (55,56) einschließt, das einer Verschiebung jeweils dieser Aufhängung gegenüber dem Hauptrahmen (3) entgegenwirkt, und daß das Verbindungsglied ein Seil (59) umfaßt, das die beiden Aufhängungen miteinander verbindet, um Zugkraft von einer Aufhängung auf die andere zu übertragen.

6. Ein Pedalfahrrad nach einem der vorhergehenden Ansprüche, dadurch gekennzeichnet, daß der Hauptrahmen (3) wenigstens vier parallele Querbohrungen (23,20,22,21) als Anbringungsstellen für die Kurbelachse, die Schwenklagerung für die hintere Aufhängung, eine Schwenklagerung für die vordere Aufhängung und eine Schwenklagerung für ein Lenkrohr umfaßt.

## Revendications

1. Cycle à pédales, comprenant un cadre principal (3), une suspension avant (28, 31,32) montée de façon amovible sur ledit cadre principal (3), une roue avant (1) montée de façon à tourner sur ladite suspension avant (28,31,32), une suspension arrière (26) montée de façon amovible sur ledit cadre principal (3), une roue arrière (2) montée de façon à tourner sur ladite suspension arrière (26), une paire de pédales montée de façon à tourner, via un essieu coudé, sur ledit cadre principal, et une chaîne de transmission pour transmettre un mouvement de propulsion de ladite paire de pédales vers ladite roue arrière (2), caractérisé en ce que la suspension arrière (26) est montée en pivot sur ledit cadre principal en un point (20) situé au dessus d'une ligne s'étendant entre ledit essieu coudé et l'axe de la roue arrière, et en ce qu'un lien d'interconnexion (33) interconnecte ladite suspension avant (28,31,32) et ladite suspension arrière (26) de façon que toute charge sur ladite roue avant (1), tendant à lever ladite roue avant (1) par déplacement de ladite suspension avant (28,31,32) par rapport audit cadre principal (3), applique une force audit lien d'interconnexion qui est transmise par ledit lien d'interconnexion (33) à ladite suspension arrière (26) afin de déplacer ladite suspension arrière (26) par rapport audit cadre principal (3), ledit lien d'interconnexion (33) agissant par ailleurs de façon qu'une force qui lui est appliquée par ladite suspension arrière (26), due à la tension développée dans ladite chaîne de transmission par le cycliste poussant vers le bas sur une pédale avant de ladite paire de pédales, est sensiblement entièrement transmise à ladite suspension avant (28, 31, 32) en opposition à une force appliquée audit lien d' interconnexion (33) due à une charge placée sur ladite suspension avant par le cycliste poussant vers le bas sur ladite pédale avant.

2. Cycle à pédales selon la revendication 1, caractérisé par des moyens de déviation élastiques (35,36) afin de s'opposer à un déplacement dudit lien d'interconnexion (33) selon une direction s'écartant de ladite suspension arrière (26) et se rapprochant de ladite suspension avant.

3. Cycle à pédales selon la revendication 2, caractérisé en ce que ledit lien d'interconnexion (33) comprend une tige longitudinalement mobile par rapport audit cadre principal, lesdits moyens de déviation (35,36) agissant entre ladite tige (33) et ledit cadre principal (3) en s'opposant à un mouvement longitudinal de ladite tige (33) dans ladite direction.

4. Cycle à pédales selon la revendication 3, caractérisé en ce qu'un dispositif à mouvement à vide (34) est compris dans ladite tige (33).

5. Cycle à pédales selon la revendication 2, caractérisé en ce que chaque suspension comprend un élément élastique (55, 56) s'opposant de façon indépendante à un déplacement de cette suspension par rapport au cadre principal (3), et en ce que ledit lien d'interconnexion comprend un câble (59) qui interconnecte les deux suspensions afin de transmettre une force sous une tension entre une suspension et l'autre.

6. Cycle à pédales selon l'une quelconque des revendications précédentes, caractérisé en ce que ledit cadre principal (3) comprend au moins quatre alésages transverses et parallèles (20, 21, 22, 23) servant de points de montage pour l'essieu coudé, ledit pivot de suspension arrière, un pivot de suspension avant et un pivot de tube de direction.
